# EUROPÄISCHE PATENTSCHRIFT

(11) **EP 0 928 316 B1**
(45) Veröffentlichungstag und Bekanntmachung des Hinweises auf die Patenterteilung: **21.03.2001**
(21) Anmeldenummer: 97910364.5
(22) Anmeldetag: 25.09.1997
(51) Int. Cl.: C08L 33/06

(54) **ZWEIPHASIGE, IN WÄSSRIGEM ALKALI AUFLÖSBARE POLYMERKOMBINATION**
TWO-PHASE POLYMER COMBINATION SOLUBLE IN AN AQUEOUS ALKALI
COMPOSITION POLYMERE A DEUX PHASES, SOLUBLE DANS UN ALCALI AQUEUX

(30) Priorität: 25.09.1996 DE 19639347
(43) Veröffentlichungstag der Anmeldung: 14.07.1999
(73) Patentinhaber: BELLAND AG, 4502 Solothurn (CH)
(72) Erfinder: RUGGIERI, Juan, Carlos, CH-2543 Lengnau (CH); DEIBIG, Heiner, CH-4524 Günsberg (CH); WIELGOLINSKI, Lee, North Andover, MA 01845 (US)
(74) Vertreter: Patentanwälte Ruff, Beier und Partner
(86) Internationale Anmeldenummer: EP9705273
(87) Internationale Veröffentlichungsnummer: WO9813423

(56) Entgegenhaltungen:
- EP-A- 0 180 819
- EP-A- 0 209 165
- FR-A- 1 376 820
- PATENT ABSTRACTS OF JAPAN vol. 012, no. 241 (M-716), 8.Juli 1988 & JP 63 031733 A (MITSUBISHI PETROCHEM CO LTD), 10.Februar 1988,

## Beschreibung

Die Erfindung betrifft eine zweiphasige, in wäßrigem Alkali auflösbare Polymerkombination und ein Verfahren zu ihrer Herstellung.

In wäßrigem Alkali auflösbare Kunststoffe, die in wäßrigem saurem Medium und in der Regel auch in neutralem wäßrigem Medium stabil sind, sind bekannt. Es wird in diesem Zusammenhang verwiesen auf die nachfolgenden europäischen Veröffentlichungen: EP 0 143 935 A1 und EP 0 032 244 A1. Aus der EP 0 314 156 A1 sind auch in neutralen wäßrigen Medien desintegrierbare Kunststoffe bekannt.

Bei den Polymeren handelt es sich um Copolymere oder Terpolymere von α-β-ungesättigten Monocarbonsäuren mit neutralen ungesättigten Monomeren, wie Estern von α-β-ungesättigten Carbonsäuren und anderen Vinylmonomeren. Solche Polymere können je nach Wahl der Ausgangsmonomere hart bis weich oder auch klebrig eingestellt werden.

Für manche Anwendungsarten, insbesondere bei Folien, ist es erwünscht, die Flexibilität bei relativ hohen und tiefen Temperaturen sowie die Blockfestigkeit der Kunststoffe zu verbessern.

Bei im wesentlichen neutralen Polymeren, wie gesättigten Polyestern und Polyamiden, die allenfalls noch an den freien Enden funktionelle Gruppen aufweisen, ist es bekannt, Epoxygruppen oder Anhydrid-Gruppen aufweisende Schlagzähmodifikatoren einzuarbeiten. Bei diesen Modifikatoren handelt es sich in der Regel um Ethylencopolymere und -terpolymere mit Glycidylmethacrylat sowie um Ethylencopolymere und -terpolymere mit Maleinsäureanhydrid. Durch Reaktion der Anhydrid-Gruppen bzw. Epoxygruppen der Schlagzähmodifikatoren mit den endständigen funktionellen Gruppen der neutralen Polymere verknüpfen bzw. verkoppeln sich die Ketten der beiden Polymere, wodurch die Eigenschaften des Ausgangspolymeren verändert werden können.

Aus der FR-A-1 376 820 ist es bekannt, zwei Polymere in getrennter Weise herzustellen, wobei ein Polymer freie Carboxylgruppen und das andere Polymer Epoxygruppen aufweist. Zur Herstellung von Lacken und Überzügen werden die beiden Polymere in geeigneten organischen Lösungsmitteln gelöst und miteinander vermischt. Die Lösungen können als Farben oder zur Herstellung von Überzügen verwendet werden. Beim Abtrocknen des Lösungsmittels und Erwärmen findet eine Aushärtung durch Vernetzung statt.

Aus der EP-A1-0 209 165 ist es bekannt, vorvernetzte Carboxylgruppen enthaltende Polymere, bei denen die Carboxylgruppen in Salzform überführt sind, mit Glycidylgruppen enthaltenden Polyolefinen durch Aufschmelzen der die Glycidylgruppen enthaltenden Polyolefine in der Wärme in einem Kneter zu vermischen. Die erhaltenen Polymermischungen besitzen ein hohes Absorptionsvermögen für Wasser.

In ähnlicher Weise ist es aus der JP-A-63-031733 bekannt, Harzmaterial mit Absorptionsfähigkeit für Wasser herzustellen, indem Polymere mit Carboxylatgruppen und Polymere mit Glycidylgruppen durch Aufschmelzen und Kneten miteinander vermischt werden.

Bei den sauren Polymeren, wie sie die Copolymere und Terpolymere der α-β-ungesättigten Monocarbonsäuren darstellen und die entlang der Polymerkette eine Vielzahl von Carboxylgruppen besitzen, ist zu erwarten, daß wegen der dadurch bedingten multifunktionellen Eigenschaften der Polymeren Vernetzungsreaktionen mit den Schlagzähmodifikatoren eintreten und die modifizierten Polymeren dadurch ihre ursprünglichen erwünschten Eigenschaften, wie Lösbarkeit, vollständig verlieren und auch nicht mehr thermoplastisch verarbeitbar sind.

Überraschenderweise wurde gefunden, daß es trotz der multifunktionellen Eigenschaften der sauren Polymere (die Polymere der α-β-ungesättigten Monocarbonsäuren enthalten 100 bis zu 500 oder mehr Carboxylgruppen pro Molekül) möglich ist, diese mit Epoxygruppen-haltigen Schlagzähmodifikatoren zu modifizieren und dabei die gewünschten Eigenschaften im erforderlichen Maße aufrechtzuerhalten.

Gegenstand der Erfindung sind zweiphasige, in wäßrigem Alkali auflösbare Polymerkombinationen aus
a) einem Alkali-löslichen Co- oder Terpolymer einer α-β-ungesättigten Monocarbonsäure, das im wesentlichen gleichmäßig in der Molekülkette verteilte COOH-Gruppen aufweist, als kontinuierliche Phase und
b) einem in wäßrigem Alkali nicht lösbaren Co- oder Terpolymer, das entlang seiner Polymerkette Epoxygruppen aufweist, als diskontinuierliche feindisperse Phase, wobei
c) an der Oberfläche der Polymerteilchen der diskontinuerlichen Phase liegende freie Epoxygruppen mit einem Teil der Carboxylgruppen des Polymers der kontinuierlichen Phase durch Esterbildung miteinander verknüpft sind und die übrigen COOH-Gruppen in unveränderter Form vorliegen.

Die Carboxylgruppen besitzenden Polymere und die Epoxygruppen besitzenden Polymere sind als Schmelzen miteinander nicht verträglich und deshalb miteinander physikalisch nicht mischbar. Durch die Schaffung einer Disperion der Epoxygruppen-haltigen Polymerschmelze in einer kontinuierlichen Phase der Carboxylgruppen besitzendenPolymerschmelze werden begrenzte Berührungsflächen zwischen den beiden Polymerschmelzen geschaffen. Bei Aufrechterhaltung einer solchen begrenzten Berührungsfläche zwischen den beiden Phasen wird gewährleistet, daß nur im Grenzbereich Verknüpfungsreaktionen zwischen den Carboxylgruppen und den Epoxygruppen stattfinden. Dabei hat sich überraschenderweise herausgestellt, daß der Anteil an Vernetzungsreaktionen außerordentlich gering ist, was auf eine geeignete Einstellung der Scherkräfte während des Vermischens (Compoundierens) der beiden Polymeren zurückzuführen ist, so daß der Anteil der Carboxylgruppen-haltigen Polymerketten, die mit mehreren Epoxygruppen eines oder mehrerer dispergierter Polymerteilchen reagieren, vernachlässigbar gering ist. Dieser Effekt ermöglicht es, die erfindungsgemäße Polymerkombination in der Schmelze herzustellen und thermoplastisch zu verarbeiten, worauf nachfolgend noch eingegangen wird.

Als Co- und Terpolymer mit Epoxygruppen kommen in erster Linie solche von einem Glycidylacrylat oder Glycidylmethacrylat in Frage. Als α-β-ungesättigte Monocarbonsäuren sind vorzugsweise Acrylsäure und Methacrylsäure vorgesehen. Beispiele für solche Polymere finden sich in den obengenannten Druckschriften. Das Gewichtsverhältnis von COOH-Gruppen aufweisendem Polymer zu Epoxygruppen aufweisendem Polymer liegt normalerweise bei 90:10 bis 50:50, insbesondere bei 80:20 bis 60:40. Es ist vorzugsweise so eingestellt, daß die Menge an COOH-Gruppen aufweisendem Polymer die Menge an Epoxygruppen aufweisendem Polymer überwiegt. Dabei besitzen die Polymerkombinationen mit höherem Anteil an schlagzähmodifikator eine besonders gute Flexibilität auch bei tiefen Temperaturen, wogegen die Polymerkombinationen mit niedrigem Anteil an Schlagzähmodifikator thermisch ausgesprochen stabil sind und wiederholt durch thermoplastische Verfahren, wie Extrudieren und dergleichen, verarbeitbar sind, ohne ihre thermoplastischen Eigenschaften zu verlieren. Die Polymerkombinationen mit relativ hohem Anteil an Schlagzähmodifikator eignen sich besonders zur Herstellung von Folien, insbesondere für Verpackungszwecke. Die Polymerkombinationen mit relativ geringem Anteil an Schlagzähmodifikator eignen sich für die Herstellung von festen Gebrauchsgegenständen, wie Behältern, Geschirr, insbesondere Eßgeschirr, und anderen stabilen Gegenständen. Wesentliche Eigenschaften der erfindungsgemäßen Polymere und der daraus hergestellten Gegenstände ist, daß sie in wäßrigem Alkali aufgelöst, zumindest aber desintegriert werden können. Dadurch sind die erfindungsgemäßen Kunststoffe recyclingfähig, so daß eine umweltfreundliche Entsorgung der Polymerprodukte und eine Wiederaufarbeitung der Polymere möglich ist. Eine solche Wiederaufarbeitung von Carboxylgruppen-besitzenden Polymeren ist beispielsweise in der EP 0 553 683 A1 beschrieben. Bei der Auflösung in wäßrigem Alkali löst sich zwar die disperse Phase des Schlagzähmodifikators nicht im eigentlichen Sinne, die dispergierten Partikel besitzen jedoch an der Oberfläche angekoppelte Polymerketten der Carboxylgruppen-haltigen Polymere, die noch den größten Anteil an freien Carboxylgruppen besitzen. Aufgrund des alkalischen Milieus liegen die Carboxylgruppen in Salzform vor, so daß die mit den dispersen Teilchen chemisch verbundenen Carboxylpolymere wie mit den unlöslichen Teilen fest verbundene Emulgatoren bzw. Detergenzien wirken. Wird der pH-Wert einer solchen alkalischen Polymerlösung wieder in Richtung auf sauer verändert, dann fallen sowohl die echt gelösten Polymeranteile als auch die dispergierten Polymeranteile wieder aus, so daß wieder die Polymerkombination erhalten wird.

Maximal sind etwa 1 %, in der Regel weniger als 0,1 %, der Carboxylgruppen des COOH-Gruppen aufweisenden Polymers mit Epoxygruppen des dispergierten Polymers verbunden.
Die Carboxylgruppen der mit der dispersen Phase über die Estergruppe verbundenen Polymermoleküle liegen vorzugsweise zu über 90 % als freie (ungebundene) Carboxylgruppen vor.

Normalerweise sind es nur 1 bis 2 COOH-Gruppen pro reagiertem Molekül in der Grenzfläche. In wäßrigem alkalischen bzw. basischen Milieu sind mindestens 75 Gew.%, in der Regel mindestens 90 Gew.%, insbesondere mindestens 95 Gew.%, des ursprünglich eingesetzten COOH-Gruppen aufweisenden Polymers löslich. Der Rest ist an die Partikel des Modifikators gebunden und mit diesen in wäßrigem Alkali fein dispergierbar. In festem Zustand kann das erfindungsgemäße Polymer infolge unterschiedlicher Brechungsindizes des COOH-Gruppen aufweisenden Polymers und des Epoxygruppen aufweisenden dispergierten Polymers opak sein. Die Teilchengröße der Partikel des dispergierten Epoxygruppen aufweisenden Polymers liegt normalerweise im Bereich von 0,1 µm bis 100 µm, insbesondere im Bereich zwischen 0,3 µm und 10 µm. Bevorzugt ist ein Bereich zwischen 0,3 µm und 3 µm. Besonders dann, wenn aus dem modifizierten Polymer sehr dünne Folien gefertigt werden, liegt die Teilchengröße mehr im unteren Bereich.

Der Gewichtsanteil an Epoxygruppen aufweisendem Monomer, insbesondere an Glycidylacrylat bzw. Glycidylmethacrylat im Epoxygruppen-aufweisendem Polymer, liegt vorzugsweise unter 10 Gew.%, insbesondere unter 5 Gew.% und in der Regel bei 1 bis 3 Gew.%. Ein niederer Anteil an Epoxygruppen ist besonders dann vorteilhaft, wenn das modifizierte Polymer nach seiner Herstellung thermisch, insbesondere mehrfach thermoplastisch verarbeitet werden soll. Der Gewichtsanteil an α-β-ungesättigter Monocarbonsäure im COOH-Gruppen-aufweisenden Polymer liegt in Abhängigkeit vom Molekulargewicht der Säure und der gewünschten Löslichkeit zwischen 5 und 95 Gew.%, in der Regel zwischen 5 und 50 Gew.%. Dies gilt insbesondere für Acrylsäure und Methacrylsäure, wobei zu berücksichtigen ist, daß das Molekulargewicht der Methacrylsäure etwas höher ist als das der Acrylsäure.

Mit besonderem Vorteil enthält das erfindungsgemäße Polymer ein Dispergiermittel. Ein solches Dispergiermittel erhöht die feindisperse Verteilung der diskontinuierlichen Polymerphase in der kontinuierlichen Polymerphase. Überraschenderweise hat sich Silikonöl, insbesondere Dimethylsilikonöl mit einer Viskosität von 100 mPas als hervorragendes Dispergiermittel erwiesen. Das Dispergiermittel liegt im Polymer nach dessen Herstellung in der Regel in Mengen von einem Gewichtsprozent oder weniger vor, in der Regel reichen 0,5 Gew.% aus. Für eine weitere thermische Bearbeitung des erfindungsgemäßen Polymers hat sich ein Gehalt an einem Gleitmittel als sehr günstig erwiesen. Geeignete Gleitmittel sind insbesondere Stearinsäureamid und/oder Erucasäureamid. Die Gleitmittel wirken vorteilhafterweise als Vernetzungsschutz bei einer späteren thermischen Weiterverarbeitung.

Als COOH-Gruppen aufweisende Copolymere kommen insbesondere Copolymere von Acrylsäure oder Methacrylsäure mit Estern der Acrylsäure oder Methacrylsäure in Frage, wobei die alkoholische Estergruppe 1 bis 10 C-Atome, insbesondere 1 bis 8 C-Atome aufweisen kann. Das COOH-Gruppen aufweisende Polymer kann ein Terpolymer aus Butylacrylat und Acrylsäure oder Methacrylsäure und Styrol sein. Ein besonders bevorzugtes Beispiel ist ein Copolymer aus Butylacrylat oder Styrol und Acrylsäure oder Methacrylsäure, insbesondere ein Copolymer aus Butylacrylat und Acrylsäure. Bei den Terpolymeren sind bevorzugt wiederum Acrylsäure oder Methacrylsäure als α-β-ungesättigte Monocarbonsäure, sowie ein Ester dieser beiden Säuren, wobei der Alkoholanteil des Esters wiederum 1 bis 10 C-Atome, insbesondere 1 bis 8 C-Atome, aufweisen kann. Die Termonomeren sind von neutralen Comonomeren verschieden und können andere Vinylverbindungen sein, wie Vinylacetat, aromatische Vinylkohlenwasserstoffe, wie Styrol, und von Comonomeren verschiedene Acrylate oder Methacrylate, wobei Styrol bevorzugt ist. Ein bevorzugtes Terpolymer besteht aus Butylacrylat, Acrylsäure oder Methacrylsäure und Styrol, insbesondere mit nachfolgenden Gewichtsverhältnissen: 10 bis 70 Gew.% Butylacrylat, 10 bis 50 Gew.% Acrylsäure oder Methacrylsäure und 5 bis 60 Gew.% Styrol.

Die COOH-Gruppen aufweisenden Polymere sind stets vollständig amorph. Die die Epoxygruppen aufweisenden Polymere können die eingangs erwähnte Zusammensetzung haben. Besonders bevorzugt sind Terpolymere aus Ethylen, Acrylsäureester und Glycidylmethacrylat. Das Molekulargewicht der Carboxylgruppen aufweisenden Polymere liegt in der Regel im Bereich:

| | | |
|---|---|---|
| Carboxylpolymer | Mw 100 000 | bis 400 000, insbesondere |
| | Mw 150 000 | bis 200 000, bei einer |
| | Uneinheitlichkeit von 3 bis 5. | |

Das Molekulargewicht der Epoxygruppen aufweisenden Polymere liegt in der Regel im Bereich:

| | |
|---|---|
| Epoxypolymer | Mw 100 000 |
| | Mn 20 000. |

Das erfindungsgemäße Polymer kann bei seiner Herstellung unmittelbar zu den entsprechenden Gegenständen geformt werden, beispielsweise zu Folien, wie Verpackungsfolien, Strängen Profilen und dergleichen, die ggf. durch Tiefziehen, und Verschweißen weiterverarbeitet werden können. Es ist aber auch möglich, die erfindungsgemäßen Polymere zunächst in Granulatform oder in Pulverform zu fertigen und ggf. später in der gewünschten Weise, insbesondere thermoplastisch, weiter zu verarbeiten, z.B. durch Spritzguß, Folienherstellung.

Die Erfindung betrifft auch ein Verfahren zur Herstellung der erfindungsgemäßen zweiphasigen Polymerkombination. Dieses Verfahren ist dadurch gekennzeichnet, daß ein alkalilösliches Co- oder Terpolymer einer α-β-ungesättigten Monocarbonsäure, das im wesentlichen gleichmäßig über die Molekülkette verteilte COOH-Gruppen besitzt, in der Schmelze mit einem Co- oder Terpolymer, das freie Epoxygruppen besitzt, unter Einwirkung von Scherkräften vermischt wird, wobei das Mengenverhältnis der beiden Polymere so gewählt wird, daß das COOH-Gruppen-aufweisende Polymer die kontinuierliche Phase und das die Epoxygruppen-aufweisende Polymer die diskontinuierliche Phase bildet.

Trotz der Gefahr der Vernetzung infolge des multifunktionellen Aufbaus der Carboxylgruppen-haltigen Polymere ist es möglich, die Modifizierung dieser Polymere mit den Epoxygruppen-haltigen Polymeren in der Schmelze, d.h. bei erhöhter Temperatur, durchzuführen, ohne daß eine Vernetzung in ungewünschtem Maße eintritt. Mit Vorteil werden beide Polymere in festem Zustand z.B. in Granulatform vorgemischt und dann gemeinsam aufgeschmolzen. Bereits das Aufschmelzen erfolgt vorzugsweise unter gegenseitiger Vermischung. Für die Vermischung eignen sich mit besonderem Vorteil Zweischnecken-Extruder, insbesondere solche mit gleichlaufenden Schnecken. Die Teilchengröße der Partikel der diskontinuierlichen Phase kann durch Wahl der Mischtemperatur, der Mischdauer und der auf die Schmelze einwirkenden Scherkräfte eingestellt werden. Dabei hängen die Scherkräfte wiederum von der Geometrie des Mischers, zum Beispiel von der Schneckengeometrie eines Extruders, von der Drehzahl des Mischers und von der Temperatur und damit der Viskosität der Schmelze ab. Die Zugabe eines Dispergiermittels, insbesondere eines Silikonöls, kann die Scherung verstärken und zu einer Verkleinerung der Partikelgröße des Schlagzähmodifikators beitragen. Auch die Zeitdauer, die vorzugsweise möglichst kurz gehalten wird und in der Regel unter 10 Minuten liegt, spielt eine Rolle. Das Epoxygruppen-haltige Polymer hat in der Regel einen niedrigeren Schmelzpunkt als das Carboxylgruppen aufweisende Polymer und beginnt deshalb beim Aufheizen zuerst zu schmelzen. Die Mischtemperatur liegt in der Regel im Bereich von 180 bis 220 °C, insbesondere etwa bei 200 °C. Nach einer anfänglichen Grobdispergierung kann, wie oben erwähnt, ein Dispergierungsmittel zugegeben werden, um die Feindispergierung zu beschleunigen. Die Reaktion der Carboxylgruppen mit den an der Oberfläche der dispergierten Teile freiliegenden Epoxygruppen unter Esterbildung findet während des Mischvorganges in der Schmelze statt. Durch die Zugabe des Dispergiermittels kann mit einer kürzeren Mischdauer eine gute Dispergierung der Epoxygruppen aufweisenden Polymerteilchen erhalten werden, als dies ohne Zugabe von Dispergiermittel der Fall wäre. Die Wirkungsweise des Silikonöls ist nicht bekannt. Für eine gute Dispergierung ist eine hohe Scherung erforderlich.

Vorzugsweise werden keine Katalysatoren zugegeben, um den Umfang der Reaktion zu begrenzen. Auch ein gegen Ende des Misch- und Reaktionsvorganges zugegebenes Gleitmittel, wie oben erwähnt, dient u.a. zur Begrenzung der Vernetzung während der späteren Verarbeitung der Polymerkombination, solange sie nach als Schmelze vorliegt.

Weitere Merkmale und Einzelheiten der Erfindung ergeben sich aus der nachfolgenden Beschreibung von Ausführungsbeispielen in Verbindung mit den Unteransprüchen. Hierbei können die einzelnen Merkmale jeweils für sich oder zu mehreren in Kombination miteinander bei einer Ausführungsform der Erfindung verwirklicht sein.

### Beispiel 1

Herstellung der COOH-Gruppen enthaltenden Polymeren als Hartkomponente durch kontinuierliche Polymerisation in einem Rührkessel-Reaktionsextruder-System.

Rezept für den Vorreaktor (Rührkessel) in Gewichtsprozent

| | |
|---|---|
| 45 % | Styrol |
| 20 % | Butylacrylat |
| 35 % | Acrylsäure |
| 0,1 % | n-Dodecylmercaptan additiv. |

Die Monomermischung wird in den Rührkessel eingepumpt.

| | |
|---|---|
| Massetemperatur im Rührkessel | 134 °C |
| Fixbett im Rührkessel | 50 kg |
| Durchsatz | 50 kg/h. |

Nach der Reaktion im Rührkessel resultiert eine 30 - 40%ige Lösung des Polymeren im restlichen Monomergemisch. Die Lösung wird in den Reaktionsextruder (Zweischnecken-Extruder (ZE 90) von Berstorff, ca. 22 l freies Volumen)) gepumpt, Polymerisationstemperatur 145 °C. In der ersten Zone des Extruders werden, bezogen auf das Monomergemisch, 0,3 % Initiator (tert-Butylperoxybenzoat), gelöst in n-Butylacetat, zugefügt.

Die Polymerschmelze (Umsatz ca. 90 %) wird dann in den Entgasungsextruder ZE 60A (freies Volumen ca. 6 l) gepumpt und auf einen Restmonomergehalt von 100 bis 200 ppm gebracht. Die entgaste Polymerschmelze wird über eine Strangdüse und ein Kühlband in einem Schneidwerk granuliert.

| | | |
|---|---|---|
| Polymereigenschaften: | | |
| Molmasse Mw | | 150 000 g/mol |
| Molmasse Mn | | 35 000 g/mol |
| Uneinheitlichkeit | | 4,3 |
| Schmelzindex 200 °C/5 kg | ca. | 6 g/10 min |
| Carboxylgehalt | ca. | 20 % |
| Glastemperatur | | 103 °C |
| Erweichungstemperatur | | 180 °C. |

Das Terpolymer enthält etwa 170 Carboxylgruppen pro Polymermolekül.

### Beispiel 2

### Compoundierung

### (Herstellung von Granulat aus der zweiphasigen Polymerkombination)

Die Compoundierung zum Endprodukt erfolgt im Normalfall auf einem gleichsinnig drehenden Zweischnecken-Extruder. Der Extruder hatte dazu Schnecken mit überwiegend "kurzen" Förderelementen (Elemente mit hoher Steigung). Die Verweilzeit im Extruder beträgt ca. 3 Minuten.

Als Expoxygruppen-aufweisendes Polymer wurde ein handelsübliches Terpolymer aus Ethylen, Acrylsäure-butylester und Glycidylmethacrylat mit einem Gehalt an 2,5 Gew.% Glycidylmethacrylat verwendet mit folgenden Eigenschaften:

| | |
|---|---|
| Molgewicht Mw | 100 000 g/mol |
| Molgewicht Mn | 20 000 g/mol |

mit 2,5 % Glycidylmethacrylat (GMA),
das entspricht 3,5 Epoxygruppen pro Polymermolekül.
a) Thermoformcompound

| | |
|---|---|
| Rezept: | |
| 70,0 % | COOH-Gruppen aufweisendes Polymer nach Beisp. 1 |
| 24,0 % | Epoxygruppen aufweisendes Polymer |
| 0,5 % | Silikonöl 100 mPa*s (Dispergator) |
| 1,5 % | Stearinsäureamid (Gleitmittel) |
| 4,0 % | TiO2-Masterbatch (50 % TiO2). |

Das Granulat aus dem COOH-Gruppen-enthaltenden Polymer wurde mit Granulat aus dem Epoxygruppen-aufweisenden Polymer und dem Titandioxid-Masterbatch in einem Rhönrad gemischt und in einem Compoundierextruder eindosiert. Das Gemisch wurde im ersten Drittel des Extruders aufgeschmolzen, danach wurde das Silikonöl eingepumpt und schließlich im letzten Drittel das Stearinsäureamid zudosiert. Die Granulatherstellung erfolgte über eine Strangdüse und eine Kühlstrecke.

| | |
|---|---|
| Extrudertemperatur | 200 °C |
| Schneckendrehzahl | 100 rpm |

| | |
|---|---|
| Compoundeigenschaften: | |
| Carboxylgehalt | ca. 14 % |
| Schmelzindex 200 °C/10 kg | ca. 5 g/10 min |
| Glastemperatur | 117 °C. |

Aus dem Granulat des Thermoformcompounds werden o,5 bis 1 mm dicke Folien hergestellt. Mit den Folien werden durch Tiefziehen Teller (0,5 mm-Folie) und Becher (1 mm-Folie) hergestellt. Die Teile sind flexibel und formfest mit Eiswasser und kochendem Wasser.
b) Spritzgußcompound

| Rezept: | |
|---|---|
| 79,5 % | COOH-Gruppen aufweisendes Polymer nach Beisp. 1 |
| 15,0 % | Epoxygruppen aufweisendes Polymer |
| 0,5 % | Silikonöl |
| 2,0 % | Stearinsäureamid |
| 3,0 % | TiO2-Masterbatch. |

Der Compoundierungvorgang erfolgt in gleicher Weise wie beim Thermoformcompound.

| | |
|---|---|
| Compoundeigenschaften: | |
| Carboxylgehalt | ca. 16 % |
| Schmelzindex 210 °C/5 kg | ca. 6 g/10 min |
| Glastemperatur | 115 °C. |

Aus dem Granulat des Spritzgußcompounds werden z.B. Messer, Gabeln und Löffel hergestellt.
c) Kälteflexible Folie

| | |
|---|---|
| Rezept: | |
| 60 % | COOH-Gruppen aufweisendes Polymer aus 60 Gew.% Butylacrylat, 20 % Acrylsäure und 20 Gew.% Styrol |
| 40 % | Epoxygruppen aufweisendes Polymer |

| | |
|---|---|
| Compoundierbedingungen: | |
| Extrudertemperatur | 200 °C |
| Schneckendrehzahl | 100 rpm |

| | |
|---|---|
| Granulateigenschaften: | |
| Carboxylgehalt | ca. 7 % |
| Schmelzindex 190 °C/5 kg | ca. 12 g/10 min |
| Glastemperatur | 40 °C |

| | |
|---|---|
| Preßfolie: | |
| Zugfestigkeit | 15 N/mm² |
| Dehnung | 260 % |
| Dehnung flexibel bis | -20 °C |

## Patentansprüche

1. Zweiphasige, in wäßrigem Alkali auflösbare Polymerkombination aus
a) einem Alkali-löslichen Co- oder Terpolymer von einer α-β-ungesättigten Monocarbonsäure, das im wesentlichen gleichmäßig über die Molekülkette verteilt COOH-Gruppen besitzt, als kontinuierliche Phase und
b) einem in wäßrigem Alkali nicht lösbaren Co- oder Terpolymer, das entlang seiner Polymerkette Epoxygruppen aufweist, als diskontinuierliche feindisperse Phase, wobei
c) an der Oberfläche der Polymerteilchen der diskontinuerlichen Phase liegende freie Epoxygruppen mit einem Teil der Carboxylgruppen des Polymers der kontinuierlichen Phase durch Esterbildung miteinander verknüpft sind und die übrigen COOH-Gruppen in unveränderter Form vorliegen.

2. Polymerkombination nach Anspruch 1, dadurch gekennzeichnet, daß das Gewichtsverhältnis von COOH-Gruppen aufweisendem Polymer zu Epoxygruppen aufweisendem Polymer 90:10 bis 50:50, insbesondere bei 80:20 bis 60:40 liegt.

3. Polymerkombination nach Anspruch 1 oder 2, dadurch gekennzeichnet, daß maximal etwa 1 % der Carboxylgruppen des COOH-Gruppen aufweisenden Polymers mit Epoxygruppen verbunden sind.

4. Polymerkombination nach einem der vorhergehenden Ansprüche, dadurch gekennzeichnet, daß in wäßrigem Alkali mindestens 90 Gew.%, insbesondere mindestens 95 Gew.% des eingemischten COOH-Gruppen aufweisendes Polymers löslich sind und der Rest in wäßrigem Alkali fein dispergierbar ist.

5. Polymerkombination nach einem der vorhergehenden Ansprüche, dadurch gekennzeichnet, daß die Carboxylgruppen der mit der dispersen Phase über die Estergruppen verbundenen Polymermoleküle zu über 90 % als freie (ungebundene) Carboxylgruppen vorliegen.

6. Polymerkombination nach einem der vorhergehenden Ansprüche, dadurch gekennzeichnet, daß die α-β-ungesättigte Monocarbonsäure Acrylsäure oder Methacrylsäure ist.

7. Polymerkombination nach einem der vorhergehenden Ansprüche, dadurch gekennzeichnet, daß die Teilchengröße des dispersen Epoxygruppen aufweisenden Polymer im Bereich von 0,1 µm bis 100 µm, insbesondere im Bereich zwischen 0,3 µm und 10 µm liegt.

8. Polymerkombination nach einem der vorhergehenden Ansprüche, dadurch gekennzeichnet, daß sie thermoplastisch verarbeitbar ist.

9. Polymerkombination nach einem der vorhergehenden Ansprüche, dadurch gekennzeichnet, daß der Gewichtsanteil an Epoxygruppen aufweisenden Monomeren im Epoxygruppen aufweisenden Polymer unter 10 Gew.%, insbesondere unter 5 Gew.%, liegt.

10. Polymerkombination nach einem der vorhergehenden Ansprüche, dadurch gekennzeichnet, daß das Epoxygruppen aufweisende Polymer ein Co- oder Terpolymer von Glycidylacrylat oder Glycidylmethacrylat ist.

11. Polymerkombination nach einem der vorhergehenden Ansprüche, dadurch gekennzeichnet, daß der Gewichtsanteil an Acrylsäure oder Methacrylsäure im COOH-Gruppen aufweisenden Polymer bei 5 bis 95 Gew.%, insbesondere 5 bis 50 Gew.%, liegt.

12. Polymerkombination nach einem der vorhergehenden Ansprüche, dadurch gekennzeichnet, daß sie ein Dispergiermittel enthält, insbesondere Silikonöl.

13. Polymerkombination nach einem der vorhergehenden Ansprüche, dadurch gekennzeichnet, daß sie ein Gleitmittel enthält, insbesondere Stearinsäureamid oder Erucasäureamid.

14. Polymerkombination nach einem der vorhergehenden Ansprüche, dadurch gekennzeichnet, daß das COOH-Gruppen aufweisende Polymer ein Copolymer aus Butylacrylat oder Styrol und Acrylsäure oder Methacrylsäure ist.

15. Polymerkombination nach einem der Ansprüche 1 bis 13, dadurch gekennzeichnet, daß das COOH-Gruppen aufweisende Polymer ein Terpolymer aus Butylacrylat, Acrylsäure oder Methacrylsäure und Styrol ist.

16. Polymerkombination nach einem der vorhergehenden Ansprüche, dadurch gekennzeichnet, daß das COOH-Gruppen aufweisende Polymer vollständig amorph ist.

17. Polymerkombination nach einem der vorhergehenden Ansprüche, dadurch gekennzeichnet, daß sie in Form eines thermoplastisch verarbeitbaren Granulates oder Pulvers vorliegt.

18. Polymerkombination nach einem der vorhergehenden Ansprüche, dadurch gekennzeichnet, daß sie in Form einer Folie, insbesondere Verpackungsfolie, vorliegt.

19. Polymerkombination nach einem der vorhergehenden Ansprüche, dadurch gekennzeichnet, daß sie in Form von Gebrauchsgegenständen, insbesondere Geschirr, vorliegt.

20. Verfahren zur Herstellung der zweiphasigen Polymerkombination nach einem der vorhergehenden Ansprüche, dadurch gekennzeichnet, daß ein alkalilösliches Co- oder Terpolymer einer α-β-ungesättigten Monocarbonsäure, das im wesentlichen gleichmäßig über die Molekülkette verteilte COOH-Gruppen besitzt, in der Schmelze mit einem Co- oder Terpolymer, das freie Epoxygruppen besitzt, unter Einwirkung von Scherkräften vermischt wird, wobei das Mengenverhältnis der beiden Polymere so gewählt wird, daß das COOH-Gruppen aufweisende Polymer die kontinuierliche Phase und das die Epoxygruppen aufweisende Polymer die diskontinuierliche Phase bildet.

21. Verfahren nach Anspruch 20, dadurch gekennzeichnet, daß die Partikelgröße der diskontinuierlichen Phase durch Wahl der Mischtemperatur, der Mischdauer und der auf die Schmelze einwirkenden Scherkräfte eingestellt wird.

22. Verfahren nach Anspruch 21 oder 22, dadurch gekennzeichnet, daß das Vermischen bei einer Temperatur im Bereich von 180 bis 220 °C, insbesondere im Bereich von ca. 200 °C, durchgeführt wird.

23. Verfahren nach einem der Ansprüche 20 bis 22, dadurch gekennzeichnet, daß die Reaktion der Carboxylgruppen mit den Epoxygruppen unter Esterbildung während des Mischvorganges in der Schmelze durchgeführt wird.

24. Verfahren nach einem der Ansprüche 20 bis 23, dadurch gekennzeichnet, daß die Reaktion in Abwesenheit von Katalysatoren durchgeführt wird.

25. Verfahren nach der Ansprüche 20 bis 24, dadurch gekennzeichnet, daß der Schmelze während des Mischvorganges ein Dispergiermittel zugesetzt wird, um die Feindispergierung der diskontinuierlichen Phase in der kontinuierlichen Phase zu erhöhen.

26. Verfahren nach einem der Ansprüche 20 bis 25, dadurch gekennzeichnet, daß der erhaltenen Polymerkombination, solange sie noch als Schmelze vorliegt, ein Gleitmittel zugemischt wird.

## Claims

1. Two-phase polymer combination soluble in aqueous alkali comprising
a) an alkali-soluble copolymer or terpolymer of an α-β-unsaturated monocarboxylic acid having COOH groups substantially uniformly distributed over the molecular chain as the continuous phase and
b) a copolymer or terpolymer not soluble in aqueous alkali and having along its polymer chain epoxy groups as the discontinuous, finely dispersed phase, in which
c) free epoxy groups located on the surface of the polymer particles of the discontinuous phase with part of the carboxyl groups of the polymer of the continuous phase are linked together by ester formation and the remaining COOH groups are present in unchanged form.

2. Polymer combination according to claim 1, characterized in that the weight ratio of polymer having COOH groups to polymer having epoxy groups is 90:10 to 50:50, particularly 80:20 to 60:40.

3. Polymer combination according to claim 1 or 2, characterized in that max approximately 1% of the carboxyl groups of the polymer having COOH groups are linked with epoxy groups.

4. Polymer combination according to one of the preceding claims,
characterized in that at least 90 wt.% and in particular at least 95 wt.% of the polymer having mixed in COOH groups are soluble in aqueous alkali and the remainder is finely dispersible in aqueous alkali.

5. Polymer combination according to one of the preceding claims,
characterized in that the carboxyl groups of the polymer molecules linked by means of ester groups to the disperse phase are present in a proportion above 90% as free (uncombined) carboxyl groups.

6. Polymer combination according to one of the preceding claims,
characterized in that the α-β-unsaturated monocarboxylic acid is acrylic acid or methacrylic acid.

7. Polymer combination according to one of the preceding claims,
characterized in that the particle size of the polymer having disperse epoxy groups is in the range 0.1 to 100 µm, particularly in the range between 0.3 and 10 µm.

8. Polymer combination according to one of the preceding claims,
characterized in that it is thermoplastically processable.

9. Polymer combination according to one of the preceding claims,
characterized in that the percentage by weight of monomers having epoxy groups in the polymer having epoxy groups is below 10 wt.%, particularly below 5 wt.%.

10. Polymer combination according to one of the preceding claims,
characterized in that the polymer having the epoxy groups is a copolymer or terpolymer of glycidyl acrylate or glycidyl methacrylate.

11. Polymer combination according to one of the preceding claims,
characterized in that the percentage by weight of acrylic acid or methacrylic acid in the polymer having COOH groups is 5 to 95 wt.%, particularly 5 to 50 wt.%.

12. Polymer combination according to one of the preceding claims,
characterized in that it contains a dispersant, particularly silicone oil.

13. Polymer combination according to one of the preceding claims,
characterized in that it contains a lubricant, particularly stearic acid amide or erucic acid amide.

14. Polymer combination according to one of the preceding claims,
characterized in that the polymer having the COOH groups is a copolymer of butyl acrylate or styrene and acrylic acid or methacrylic acid.

15. Polymer combination according to one of the claims 1 to 13, characterized in that the polymer having the COOH groups is a terpolymer of butyl acrylate, acrylic acid or methacrylic acid and styrene.

16. Polymer combination according to one of the preceding claims,
characterized in that the polymer having the COOH groups is completely amorphous.

17. Polymer combination according to one of the preceding claims,
characterized in that it is in the form of a thermoplastically processable granulate or powder.

18. Polymer combination according to one of the preceding claims,
characterized in that it is in the form of a film, particularly a packaging film.

19. Polymer combination according to one of the preceding claims,
characterized in that it is in the form of commodities, particularly utensils.

20. Process for the production of the two-phase polymer combination according to one of the preceding claims, characterized in that an alkali-soluble copolymer or terpolymer of an α-β-unsaturated monocarboxylic acid, which has COOH groups substantially uniformly distributed over the molecular chain, is mixed under the action of shear forces in the melt with a copolymer or terpolymer having free epoxy groups, the quantity ratio of the two polymers being chosen in such a way that the polymer having the COOH groups forms the continuous phase and the polymer having the epoxy groups forms the discontinuous phase.

21. Process according to claim 20, characterized in that the particle size of the discontinuous phase is adjusted by the choice of the mixing temperature, the mixing time and the shear forces acting on the melt.

22. Process according to claim 20 or 21, characterized in that mixing is carried out at a temperature in the range 180 to 220°C, particularly at approximately 200°C.

23. Process according to one of the claims 20 to 22, characterized in that the reaction of the carboxyl groups with the epoxy groups takes place accompanied by ester formation during the mixing process in the melt.

24. Process according to one of the claims 20 to 23, characterized in that the reaction is performed in the absence of catalysts.

25. Process according to claims 20 to 24, characterized in that a dispersant is added to the melt during the mixing process in order to increase the fine dispersion of the discontinuous phase in the continuous phase.

26. Process according to one of the claims 20 to 25, characterized in that a lubricant is admixed with the polymer combination obtained for as long as it is still in melt form.

## Revendications

1. Composition polymère à deux phases soluble dans un alcali aqueux se composant de
a) un co- ou terpolymère d'un acide de monocarbone α-β-insaturé, soluble dans un alcali qui possède en tant que phase continue des groupes COOH sensiblement répartis de manière homogène sur la chaîne de molécule et
b) un co- ou terpolymère insoluble dans l'alcali aqueux qui présente des groupes époxy sur sa chaîne de polymère en tant que phase discontinue à dispersion fine,
c) des groupes libres d'époxy se trouvant sur la surface des particules de polymère de la phase discontinue sont reliés entre eux avec une partie des groupes carboxyliques du polymère de la phase continue par formation d'ester et les groupes COOH restants conservent leur forme intacte.

2. Composition polymère selon la revendication 1,
caractérisée en ce que le rapport pondéral entre le polymère présentant des groupes COOH et le polymère présentant des groupes époxy est compris entre 90 : 10 et 50:50, en particulier entre 80:20 et 60:40.

3. Composition polymère selon la revendication 1 ou 2,
caractérisée en ce qu'au maximum environ 1 % des groupes carboxyliques du polymère présentant des groupes COOH sont reliés aux groupes époxy.

4. Composition polymère selon l'une des revendications précédentes, caractérisée en ce que dans l'alcali aqueux au moins 90 % en poids, en particulier 95 % en poids du polymère présentant des groupes COOH mélangés sont solubles et le reste est dispersible finement dans l'alcali aqueux.

5. Composition polymère selon l'une des revendications précédentes, caractérisée en ce que les groupes carboxyliques des molécules polymères reliées à la phase dispersée par les groupes d'ester se trouvent à plus de 90 % comme groupes carboxyliques libres (non liés).

6. Composition polymère selon l'une des revendications précédentes, caractérisée en ce que l'acide monocarbone α-β-insaturé est de l'acide acrylique ou de l'acide méthacrylique.

7. Combinaison polymère selon l'une des revendications précédentes, caractérisée en ce que la taille des particules du polymère présentant des groupes époxy dispersés sont comprises entre 0,1 µm et 100 µm, en particulier entre 0,3 µm et 10 µm.

8. Composition polymère selon l'une des revendications précédentes, caractérisée en ce qu'elle peut être travaillée thermoplastiquement.

9. Composition polymère selon l'une des revendications précédentes, caractérisée en ce que la part pondérale des monomères présentant des groupes époxy dans le polymère présentant des groupes époxy est inférieure à 10 % en poids et particulièrement à 5 % en poids.

10. Composition polymère selon l'une des revendications précédentes, caractérisée en ce que le polymère présentant des groupes époxy est un co- ou terpolymère d'acrylate de glycidyle ou méthacrylate de glycidyle.

11. Composition polymère selon l'une des revendications précédentes, caractérisée en ce que la part pondérale des acides acryliques ou des acides méthacryliques dans le polymère présentant des groupes COOH est comprise entre 5 % et 95 % en poids et particulièrement entre 5 et 50 % en poids.

12. Composition polymère selon l'une des revendications précédentes, caractérisée en ce qu'elle comprend un agent dispersif, en particulier l'huile de silicone.

13. Composition polymère selon l'une des revendications précédentes, caractérisée en ce qu'elle contient un agent dispersif en particulier l'amide d'acide de stéarine ou l'amide d'acide d'éruca.

14. Composition polymère selon l'une des revendications précédentes, caractérisée en ce que le polymère présentant des groupes COOH est un copolymère en acrylate de butyle, ou styrène et acide acrylique ou acide méthacrylique.

15. Composition polymère selon l'une des revendications 1 à 13, caractérisée en ce que le polymère présentant des groupes COOH est un terpolymère en acrylate de butyle, acide acrylique ou acide méthacrylique et styrène.

16. Composition polymère selon l'une des revendications précédentes, caractérisée en ce que le polymère présentant des groupes COOH est complètement amorphe.

17. Composition polymère selon l'une des revendications précédentes, caractérisée en ce qu'elle a la forme d'un granulé ou poudre pouvant être travaillé par thermoplastie.

18. Composition polymère selon l'une des revendications précédentes, caractérisée en ce qu'elle a la forme d'une feuille, en particulier d'une feuille d'emballage.

19. Composition polymère selon l'une des revendications précédentes, caractérisée en ce qu'elle a la forme d'objets usuels en particulier de la vaisselle.

20. Procédé pour la fabrication de la composition polymère à deux phases selon l'une des revendications précédentes caractérisé en ce qu'un co ou terpolymère d'un acide monocarbone α-β-insaturé, soluble dans l'alcali, qui possède des groupes COOH répartis sur la chaîne de molécules essentiellement régulièrement est mélangé sous l'action de forces de cisaillement dans la fusion avec un co- ou terpolymère qui possède des groupes libres époxy, le rapport de quantité des deux polymères étant sélectionné de sorte que le polymère présentant des groupes COOH forme la phase continue et que le polymère présentant les groupes époxy forme la phase discontinue.

21. Procédé selon la revendication 20, caractérisée en ce que la taille de particules de la phase discontinue est réglée par sélection de la température de mélange, de la durée de mélange et des forces de cisaillement agissant sur la fusion.

22. Procédé selon la revendication 21 ou 22, caractérisé en ce que le mélange est effectuée à une température comprise entre 180 et 220°C, en particulier vers environ 200°C.

23. Procédé selon l'une des revendications 20 à 22
caractérisé en ce que la réaction des groupes carboxyliques avec les groupes époxy est effectué en formant de l'ester pendant l'opération de mélange dans la fusion.

24. Procédé selon l'une des revendications 20 à 23,
caractérisé en ce que la réaction est effectuée en l'absence de catalyseurs.

25. Procédé selon l'une des revendications 20 à 24,
caractérisé en ce qu'il est ajouté à la fusion pendant l'opération de mélange un agent dispersif pour augmenter la dispersion fine de la phase discontinue dans la phase continue.

26. Procédé selon l'une des revendications 20 à 25,
caractérisé en ce que la combinaison de polymère obtenue est mélangée à un lubrifiant tant qu'elle a toujours la forme de fusion.
